# EUROPEAN PATENT SPECIFICATION

(11) **EP 4 243 129 B1**
(45) Date of publication and mention of the grant of the patent: **23.04.2025**
(21) Application number: 21896099.5
(22) Date of filing: 18.03.2021
(51) Int. Cl.: H01M 8/0271, H01M 8/0286, H01M 4/88, H01M 8/1226, H01M 4/86, H01M 8/12

(54) **SOLID OXIDE CELL CHIP WITH DOUBLE-ELECTROLYTE STRUCTURE AND PREPARATION METHOD**
FESTOXIDZELLENCHIP MIT DOPPELELEKTROLYTSTRUKTUR UND HERSTELLUNGSVERFAHREN
PUCE DE PILE À OXYDE SOLIDE À STRUCTURE À DOUBLE ÉLECTROLYTE ET PROCÉDÉ DE PRÉPARATION

(30) Priority: 25.11.2020 CN 202011337853
(43) Date of publication of application: 13.09.2023
(73) Proprietor: ZHEJIANG ZHENTAI ENERGY TECHNOLOGY CO., LTD, Lishui, Zhejiang 321400 (CN)
(72) Inventor: HU, Qiang, Lishui, Zhejiang 321400 (CN); WU, Jian, Lishui, Zhejiang 321400 (CN)
(74) Representative: Bayramoglu et al.
(86) International application number: PCT/CN2021/081647
(87) International publication number: WO 2022/110580

(56) References cited:
- CN-A- 102 084 527
- CN-A- 107 959 036
- CN-A- 109 216 740
- CN-A- 112 467 164
- CN-A- 112 467 165
- CN-U- 213 905 412
- JP-A- 2017 134 941
- US-A1- 2007 259 235
- US-A1- 2012 034 547

## Description

### TECHNICAL FIELD

The present disclosure belongs to the technical field of electrochemistry, and relates to a solid oxide cell (SOC) chip and a preparation method thereof, in particular to an SOC chip with a double-electrolyte structure and a preparation method thereof.

### BACKGROUND

### 1. Operating Principle of SOC

SOC is a ceramic electrochemical device that uses a solid oxide as an electrolyte and includes at least one electrolyte and at least two electrodes. An SOC with the electrode providing the overall strength is referred to as an electrode-supported SOC, while an SOC with the electrolyte providing the overall strength is referred to as an electrolyte-supported SOC. The electrolyte is usually made of stabilized zirconia, such as yttria (Y₂O₃) stabilized zirconia (YSZ), scandia (Sc₂O₃) stabilized zirconia (ScSZ), scandia and yttria stabilized zirconia (ScYSZ), scandia and ceria stabilized zirconia (ScCeSZ), or calcium oxide (CaO) stabilized zirconia (CSZ). Among them, the most widely used is 8mol% yttria stabilized zirconia (8YSZ). The electrolyte can also be made of other oxides with a fluorite structure, such as gadolinia (Gd₂O₃) doped ceria (GDC) or Samaria (Sm₂O₃) doped ceria (SDC), or an oxide with a perovskite structure, such as LaSrGaMgO (LSGM). These electrolyte materials are well-known to industry insiders (V. V. Kharton, et al. Transport properties of solid oxide electrolyte ceramics: a brief review. Solid State Ionics. 174: 135-149 (2004)). The electrode can be made of an oxide with a perovskite structure, such as LaSrMnO (LSM) or LaSrCoFeO (LSCF), an oxide with a fluorite structure, such as SDC and GDC, a compound, such as one of LSM and YSZ/CGO, a precious metal such as platinum (Pt), or a compound including a precious metal, such as a compound of Pt and YSZ. These electrode materials are well-known to industry insiders (E. V. Tsipis, et al. Electrode materials and reaction mechanisms in solid oxide fuel cells: a brief review. J. Solid State Electrochem. 12:1367-1391 (2008)).

During operation, there is a difference of 10 times or multiple orders of magnitude in the oxygen concentration in the proximity of the at least two electrodes of the SOC. A gas with a high oxygen concentration is referred to as an oxygen-rich gas, and an electrode operating in the oxygen-rich gas is referred to as an oxygen-rich electrode. A gas with a low oxygen concentration is referred to as an oxygen-deficient gas, and an electrode operating in the oxygen-deficient gas is referred to as an oxygen-deficient electrode. The oxygen-rich gas includes oxygen, nitrogen, argon, and helium. The most commonly used and typical oxygen-rich gas is air, and an electrode operating in air is referred to as an air electrode. The oxygen-deficient gas includes carbon monoxide (CO), methane, methanol, and hydrogen (H₂), which have a fuel or reducing property. A typical oxygen-deficient atmosphere includes a mixture of H₂ and water vapor (H₂O), a mixture of H₂, carbon monoxide (CO), and H₂, a mixture of CO and carbon dioxide (CO₂), and a mixture of nitrogen oxide (NOₓ) and nitrogen, and an electrode operating in the oxygen-deficient atmosphere is referred to as a fuel electrode. The oxygen-deficient electrode and the oxygen-rich electrode are separated by the electrolyte. The electrolyte needs to be as dense and tight as possible, and its conductivity should be achieved as much as possible through ion rather than electron migration. If there is electronic conductivity in the electrolyte, there will be a short-circuit current in the SOC, which will cause a significant decrease in the overall efficiency of the SOC. The charge transfer of the electrolyte in the SOC usually takes oxygen ions (O²⁻) as a carrier to achieve oxygen ion conductivity.

The SOC operates at 500-1,000°C, and has two operating modes, namely solid oxide fuel cell (SOFC) and solid oxide electrolysis cell (SOEC). In the SOFC mode, the oxygen molecules in the oxygen-rich electrode undergo a reduction reaction to form O²⁻, which migrate from the side of the oxygen-rich electrode through the electrolyte to the side of the oxygen-deficient electrode. If there are fuel gas molecules inside the oxygen-deficient electrode, O²⁻ will react chemically with the fuel gas molecules inside the oxygen-deficient electrode. Typically, if the gas in the oxygen-deficient electrode includes H₂ and CO, the chemical reactions occurring in the oxygen-deficient electrode include:

H₂+O²⁻ → H₂O+2e⁻

CO+O²⁻ → CO₂+2e⁻

Throughout the process, at a macro perspective, the oxygen molecules migrate from the side of the oxygen-rich gas through the electrolyte to the side of the oxygen-deficient gas, and the difference in the oxygen concentration between the oxygen-rich gas and the oxygen-deficient gas decreases accordingly. In the SOFC mode, the chemical energy of the oxygen-deficient gas is converted into electrical energy, and the electrical energy is output externally. For example, in the SOFC mode, if H₂ and oxygen (O₂) electrodes are used, the electrode reactions and overall electrochemical reaction are expressed as follows:
Anode (oxygen-deficient electrode):

   H₂+ O²⁻ → H₂O+2e⁻
Cathode (oxygen-rich electrode):

   1/2O₂+2e⁻ → O²⁻
Overall reaction:

   H₂+1/2O₂ → H₂O

If the electrode reaction product is not removed in a timely manner, the difference in the oxygen concentration between the oxygen-rich gas and the oxygen-deficient gas will decrease as the reaction progresses.

In the SOEC mode, the oxygen molecules or O²⁻ in the gas such as O₂, H₂O, CO₂, or NOₓ in the oxygen-deficient electrode migrate through the electrolyte in the form of O²⁻ under the action of an external electric field, and undergo an oxidation reaction in the oxygen-rich electrode to generate oxygen molecules. Throughout the process, at a macro perspective, under the action of the external electric field, the oxygen molecules migrate from the side of the oxygen-rich gas with a lower oxygen concentration through the electrolyte to the side of the oxygen-rich gas with a higher oxygen concentration, and the difference in the oxygen concentration between the oxygen-rich gas and the oxygen-deficient gas increases accordingly. In the SOEC mode, the electrical energy input from the outside is absorbed and converted into chemical energy of the oxygen-deficient gas. For example, in the SOEC mode, if H₂ and O₂ electrodes are used, the electrode reactions and overall electrochemical reaction are expressed as follows:
Anode (oxygen-rich electrode):

   O²⁻ → 1/2O₂+2e⁻
Cathode (oxygen-deficient electrode):

   H₂O+2e⁻ → H₂+O²⁻
Overall reaction:

   H₂O → H₂+1/2O₂

The SOC switches between the two modes to achieve mutual conversion of the electrical and chemical energy, which may be accompanied by the release or absorption of heat. Whether in the SOFC mode or the SOEC mode, the SOC may receive heat input from the outside or release its own heat to the outside. Therefore, the SOC can be used to achieve mutual conversion of electrical energy, thermal energy, and chemical energy. In the SOEC mode, the electrical energy is converted into chemical energy and stored. In the SOFC mode, the chemical energy of the oxygen-deficient gas is directly converted into electrical energy, avoiding the limitation of Carnot cycle on the power generation efficiency of the thermal-mechanical process, and achieving efficient utilization of chemical energy.

Typically, the oxygen-deficient gas can be a mixture of H₂ and H₂O. Correspondingly, in the SOFC mode, the overall reaction of the SOC is: H₂+1/2O₂ → H₂O, while in the SOEC mode, the overall reaction of the SOC is: H₂O → H₂+1/2O₂. Typically, the oxygen-deficient gas can also be a mixture of CO₂, H₂O, CO, and H₂. Correspondingly, in the SOFC mode, the overall reaction of the SOC is: H₂+1/2O₂ → H₂O and 2CO+O₂ → 2CO₂, while in the SOEC mode, the overall reaction of the SOC is: H₂O → H₂+1/2O₂ and 2CO₂ → 2CO+O₂. An electrolytic product including CO and H₂ is also known as syngas, which can be converted through a mature Fischer-Tropsch synthesis process into a series of derived hydrocarbons, such as mature and widely used fuels or industrial raw materials, including methanol, ethanol, natural gas, gasoline, and diesel, etc. When the gas component including the oxygen element is a typical environmental pollutant such as NOₓ and sulfur oxide (SOₓ), it can be removed by using the SOC electrolysis technique. The chemical process can be expressed as follows:

NOₓ → N₂+O₂ (x=1 or 2) or SOₓ → S+O₂ (x=1 or 2)

### 2. Electrode Reaction Process of the SOC

There are at least three phases of substances participating in the electrode reaction of the SOC, namely O²⁻, electrons (e⁻), and gaseous substances, such as O₂, H₂O, H₂, and CO. In order to ensure the continuous and rapid progress of the electrode reaction, all the substances participating in the electrode reaction need fast entry and exit channels. For example, the electrons and oxygen ions required for the reaction need smooth transfer channels. That is to say, it is required that the electrode include a material with high electronic conductivity and high oxygen ion conductivity, and that the electrode have a certain porosity to facilitate the entry of a gas reactant at a high temperature into the electrode and the discharge of a gas product from the electrode reaction. A known electronic conductor used for the oxygen-deficient electrode includes nickel (Ni), gold (Au), platinum (Pt), palladium (Pd), rhodium (Rh), etc. A known oxygen ion conductor used for the oxygen-deficient electrode includes YSZ, ScYSZ, ScCeSZ, SDC, GDC, etc. Some known oxygen ion conductors, such as doped ceria like SDC and GDC, possess certain electronic conductivity, and are often referred to as hybrid conductors. A known electronic conductor used for the oxygen-rich electrode includes an oxide such as LaSrMnO, LaSrCoO, and LaSrCoFeO, which can maintain stable properties in a high-temperature oxidizing atmosphere and have a certain composition variation range. It may also include a high-temperature oxidation-resistant precious metal, such as silver (Ag), gold (Au), platinum (Pt), palladium (Pd), and rhodium (Rh). The precious metals can act as a catalyst to accelerate the electrode reaction. The oxygen ion conductor used for the oxygen-rich electrode includes YSZ, SDC, and GDC, etc. The electronic conductor used for the oxygen-rich electrode, such as LaSrCoO and LaSrCoFeO, also has certain oxygen ion conductivity, and is known as a hybrid conductor in the industry. These materials are well-known in the industry (E. V. Tsipis, et al. Electrode materials and reaction mechanisms in solid oxide fuel cells: a brief review. J. Solid State Electrochem. 12:1367-1391 (2008)).

The electrode-supported SOC is commonly used. The arrangement of gas paths in the electrode will result in a hollow portion of the electrode, which will significantly reduce the structural strength of the SOC. A larger volume and proportion of the gas paths will lead to a more uneven size of the gas paths, thereby resulting in a larger decrease in the strength of the SOC. Therefore, in a typical SOC technique, the gas paths in the electrode have a very small size, say, below 1 µm, and exhibit an irregular point-like distribution (M. B. Mogensen, et al. Reversible solid-oxide cells for clean and sustainable energy. Clean Energy: 1-27 (2019)).

The forming method of the gas paths inside the electrode usually requires adding a certain amount of pore forming agent, such as graphite or starch, to the precursor slurry. During the high-temperature sintering process of the SOC, the pore forming agent, together with some solvents such as alcohol, toluene, and isopropanol, is decomposed, and escapes from the electrode or is oxidized by oxygen in the air to form a gaseous oxide. For example, CO₂ escapes from the electrode and leaves gas pores inside the electrode. The method is well-known in the industry (M. Chen, et al. Microstructural degradation of Ni/YSZ electrodes in solid oxide electrolysis cells under high current. J. Electrochem. Soc. 160: F883-F891 (2013)).

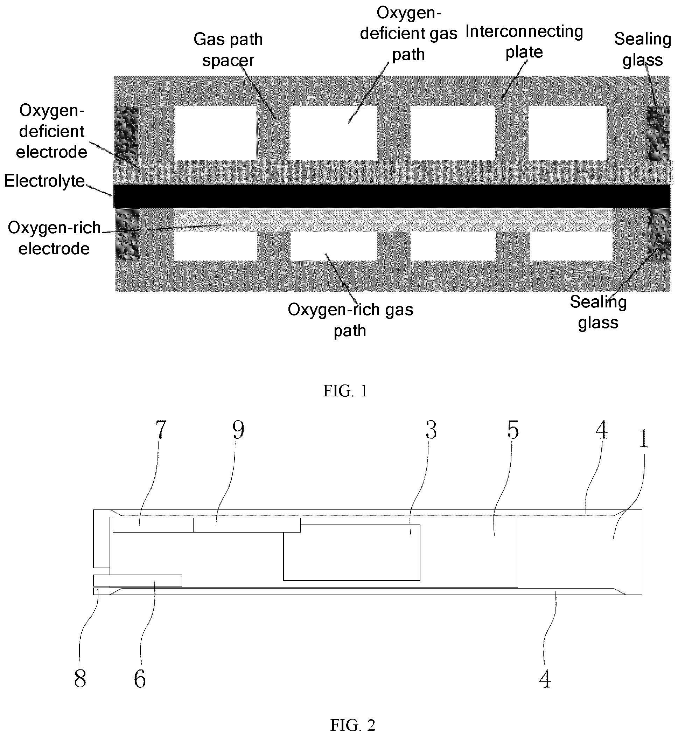

The gas paths formed by this method cannot serve as a fast gas transport path within the entire electrode, so the entire SOC cannot receive sufficient gas supply or timely discharge the gas product. A common remedy is to form external gas paths outside the electrode, with the oxygen-rich gas flowing in an oxygen-rich gas path and the oxygen-deficient gas flowing in an oxygen-deficient gas path. These gas paths are surrounded by an interconnecting plate, the SOC, and sealing glass (M. B. Mogensen, et al. Reversible solid-oxide cells for clean and sustainable energy. Clean Energy. 1-27 (2019)). FIG. 1 shows a cross-sectional view of a typical SOC available in the public literature. In this typical SOC, due to the low flow rate of the gas, especially the oxygen-deficient gas, in the electrode, the amount of the gas leaked from the side edge of the SOC is small, so there is no need to seal the side edge of the electrode. It only needs to seal the gap between the interconnecting plate and the electrode through a high-temperature sealing material such as glass. In this solution, most of the gas flows in the regularly shaped gas path located outside the SOC. The geometric shape and cross-sectional shape of the gas path can be designed and manufactured as needed. The gas reactant first diffuses through the external gas path and enters the electrochemical reaction region at the electrode-electrolyte boundary through the dense electrode. After the electrode reaction is completed, the gas product diffuses and enters the external gas path through the dense electrode for removal.

In such a design, due to the requirement of the structural strength, it is not impossible to arrange too many and too large gas paths inside the electrode. The low gas flow rate inside the electrode is one of the main factors limiting the electrode reaction rate. To alleviate this problem, the electrode of the SOC is generally very thin, with a thickness of 0.05-0.5 mm, so as to minimize the resistance of the gas entering and exiting the electrode, that is, to reduce the distance from the gas path to the electrode-electrolyte boundary. Although the thin electrode helps reduce the resistance of the gas entering and exiting the electrode, it significantly reduces the structural strength of the SOC. Therefore, the SOC designed and manufactured in this solution is prone to rupture during the assembly and use of an SOC stack, leading to the failure of the entire stack. This is one of the main factors limiting the commercialization and large- scale use of the SOC technique.

### 3. Assembly Design of the SOC Stack

Chip configuration is a common SOC configuration. A chip-SOC stack structure includes the SOC, a sealing ring, and an interconnecting plate that are sequentially connected, and the entire stack is placed in a high-temperature environment (N. Q. Minh. System design and application, in High-Temperature Solid Oxide Fuel Cells for the 21st Century (2nd Ed. ISBN: 978-0-12-410453-2), 2015). The sealing ring is generally made of glass or metal (such as gold (Au) and silver (Ag)), and the interconnecting plate is usually made of a high-temperature resistant alloy. It is usually necessary to apply a conductive and oxidation-resistant coating on the surface of the alloy interconnecting plate in contact with the SOC so as to enhance the oxidation resistance of the alloy interconnecting plate under high-temperature conditions and reduce the resistance loss in the connection of the stack. In most cases, there is also one or more than one soft metal or ceramic pad between the electrode on either side of the SOC and the alloy interconnecting plate to achieve good electrical contact between the SOC and the interconnecting plate. Typically, a mesh made of a high-temperature oxidation-resistant metal such as gold (Au) or silver (Ag) is used to ensure good electrical contact. In a chip-SOC stack, the gases (oxygen-rich gas and oxygen-deficient gas) flow in an isolated space formed by the interconnecting plate, the SOC, and the sealing ring to avoid leakage outside the stack. The components of the chip-SOC stack, including the SOC, the sealing ring, and the interconnecting plate, need to be made separately before they are assembled together. The chip-SOC stack is easy to assemble because of the regular electrode shape, short current path, and relatively high power density. However, the chip-SOC stack is not easy to apply in practice due to the following reasons.
1) The sealing ring has low reliability. The sealing ring must be tight, resistant to heat cycle, resistant to the high-temperature reducing atmosphere, resistant to the high-temperature oxidizing atmosphere, and must have a certain mechanical strength and toughness. In addition, the sealing ring must have the coefficient of thermal expansion close to that of the alloy interconnecting plate and the chip SOC, that is, to form thermal expansion match. This requires the sealing ring to maintain approximate consistency with the size change of the sealing element in case of temperature changes. It is difficult for both glass and metal sealing rings to achieve these performance requirements simultaneously. For example, the glass sealing ring is often fragile and prone to fracture and failure during SOC stacking and thermal cycling. Even if the glass sealing ring can achieve the sealing of ceramics and metals, its tolerable temperature change rate must be very small to avoid the sealing ring from bearing excessive stress and generating excessive strain. This results in very long start-up and shutdown times for an ordinary SOC stack, typically exceeding 10 h, and sometimes even exceeding 20 h.
2) Each component of the chip-SOC stack needs to be made separately, which puts forward high technical requirements, for example, for the flatness, strength, toughness, oxidation resistance, and thermal expansion match of each component. As a result, the practical application of the chip-SOC stack is limited.
3) The stacking flexibility is low. In the chip-SOC stack, each SOC is connected in series, and the sealing ring is a disposable component. After heat treatment, such as 850° fusion, of the sealing ring and the sealing element for sealing, each component of the stack, including the SOC and the interconnecting plate, cannot be replaced. Therefore, the failure of any component in the entire stack will lead to the failure of the entire stack, which greatly increases the risk of using the chip-SOC stack in practice, thereby significantly increasing the cost of using the chip-SOC stack.

Chinese patent application CN108336386B provides a solid oxide electrochemical device with a flat tube structure and a preparation method thereof. Chinese patent application CN108321408B provides a flat-tube solid oxide electrochemical device with multiple pairs of electrodes and a preparation method thereof. Chinese patent application CN108336376 B provides a flat-tube SOC structure with a high yield and high single-cell power and a preparation method thereof. They provide a solution to the aforementioned technical problem. In this solution, the SOC has a flat tube structure and can be supported by an electrolyte. During operation, the SOC spans cold and hot temperature regions to undergo an electrochemical reaction at a hot end and achieve sealing and external connection at a cold end. The SOC has the following structural characteristics. 1) The gas flow isolation structure required for operation of the SOC, namely the gas path, is surrounded by the electrolyte, two gas path walls, and a partition. 2) The electrolyte, the gas path walls, and the partition are made of the same material or materials with similar composition. 3) There is a gas path wall on an outer side of the SOC without a gas path inlet or outlet, and the gas path wall must have a certain width to ensure sealing reliability. In this solution, the sealing of the gas path is achieved by the gas path wall, instead of a commonly used high-temperature sealing material such as glass in an ordinary technique. The reserved gas path wall reduces the effective power generation area of the SOC. However, due to the fact that the material composition and properties of the gas path are close to those of the electrolyte, the following problems commonly found in in the chip-SOC technique are resolved or greatly alleviated. For example, due to the mismatch in the thermal expansion characteristics of various components of the SOC stack, the components of the SOC stack rupture and fail during the thermal cycling process of the SOC stack. After long-term high-temperature operation, the components of the SOC stack react with each other due to chemical incompatibility, resulting in the performance degradation and failure of the SOC stack.

The problem with the flat-tube SOC configuration in practical applications lies in that it is hard to balance the yield and electrical performance of the SOC. In the flat-tube solution, the structure surrounding the gas path includes at least one layer of electrolyte. The electrolyte is an essential functional component for the electrochemical reaction of the SOC. A thinner electrolyte leads to a smaller resistance to oxygen ion transport, thereby achieving better electrical performance of the SOC. However, a thinner electrolyte has poorer strength. As a result, during the preparation or operation of the SOC, when there is a large amount of gas flowing through, the electrolyte that forms a part of the gas path is prone to rupture. This will reduce the yield and reliability of the flat-tube SOC, and increase the technical cost of the flat-tube SOC. Typically, in order to provide sufficient strength for the gas tank of the flat-tube SOC, the thickness of the electrolyte generally needs to be no less than 0.5 mm. However, a 0.5 mm thick electrolyte will reduce the output power density of the SOC to be below 100 mW/cm². To increase the output power density of the SOC to over 300 mW/cm², the thickness of the electrolyte should preferably not exceed 0.1 mm. But in this case, the electrolyte is prone to rupture at the gas tank. Therefore, in this solution, it is hard to balance the yield and electrical performance of the SOC. In addition, the side of the SOC without a gas path inlet or outlet must be provided with a gas path wall. Therefore, in the preparation of the SOC, it is necessary to accurately print or fit the corresponding gas path wall slurry or film at the designated position so as to form the gas path wall at the edge of the SOC. This leads to an additional preparation step, improving the requirement for the preparation process of the SOC, increasing the cost, and reducing the production efficiency of the SOC.

The SOC provided in the aforementioned Chinese patent application can also be an electrode-supported SOC. Similarly, the SOC spans the cold and hot temperature regions to undergo the electrochemical reaction at the hot end and achieve sealing and external connection at the cold end. However, the electrolyte surrounding the gas path is replaced with an inner electrode, so the gas path is completely realized by the electrode. The strength of the gas path wall and the SOC can be achieved by appropriately increasing the thickness of the inner electrode. In addition, the electrolyte can be thinned to achieve high power of the SOC. In this solution, the outer side of the SOC without a gas path inlet or outlet is also provided with a gas path wall. The high-temperature part of the SOC is sealed by the gas path wall, instead of a commonly used high-temperature sealing material such as glass in an ordinary technique. The width of the reserved gas path wall reduces the power generation area of the SOC. In addition, the side of the SOC without a gas path inlet or outlet must be provided with a gas path wall. Therefore, in the preparation of the SOC, it is necessary to accurately print or fit the corresponding slurry or film at the designated position so as to form the gas path wall at the edge of the SOC. This leads to an additional preparation step, improving the requirement for the preparation process of the SOC, increasing the cost, and reducing the production efficiency of the SOC. This solution is effective in improving the performance and yield of the SOC, but such improvement is limited due to the low diffusion rate of the gas in the low-porosity inner electrode. An excessive increase in the thickness of the electrode will lead to insufficient gas supply for the electrode reaction, while an excessive decrease in the thickness of the electrode will lead to insufficient strength of the gas path, making it impossible to achieve high yield of the SOC.

In the aforementioned SOC, the current transfer region of the inner electrode is located between the high-temperature region in the central part of the SOC and the cold-end electrode plate responsible for external connection and sealing. The carrier of the current, i.e. the conductor, is made of a high-temperature resistant metal such as platinum (Pt) or nickel (Ni), which leads to a large current collection resistance. For example, the conductivity of precious metals such as platinum (Pt) is relatively low, about 9 × 10⁴ S/cm. Due to the high price of precious metals, they can only be formed into a thin layer, with a thickness of approximately 50 µm. The current collection resistance of the platinum (Pt) coating is approximately 20 mOhm (the line width is 1 cm and the line length is 10 cm). The conductivity of nickel (Ni) is approximately 1×10⁵ S/cm. However, due to the requirement for molding in the electrode, the nickel (Ni) content is generally below 60%, and the conductivity of the entire inner electrode is usually only 200-250 S/cm. Therefore, the current collection resistance of the nickel (Ni) electrode is about 400 mOhm (the line width is 1 cm, the line thickness is 1 mm, and the line length is 10 cm), and the current collection resistance of the inner electrode is relatively large.

In the above solution, the SOC needs to span the high- and low-temperature regions during operation. That is, the electrode of the SOC operates in the high-temperature region, and the sealing and external connection of the SOC is achieved in the low-temperature region. Therefore, the entire SOC inevitably transfers heat from the high-temperature region to the low-temperature region during operation, causing heat loss and reducing system efficiency. In such a technical solution, due to the complex preparation process of the SOC, only a simply-shaped, for example, rectangular or square SOC can be prepared in practical applications. In this shape design, the channel for heat transfer from the high-temperature region to the low-temperature region is of equal size and cross-sectional area, resulting in significant heat loss. A gradual reduction structure can be adopted to gradually reduce the size of the SOC from the high-temperature operation region to the low-temperature sealing region, so as to gradually narrow the channel for heat loss from high temperature to low temperature. The gradual reduction structure can reduce the heat loss rate of the SOC, but it is hard to be achieved in the existing technical solutions due to the complexity of the process.

US 2007/259235 A1 discloses a novel electrochemical cell which may be a solid oxide fuel cell (SOFC) where the cathodes (144, 140) may be exposed to the air and open to the ambient atmosphere without further housing. Current collector (145) extends through a first cathode on one side of a unit and over the unit through the cathode on the other side of the unit and is in electrical contact via lead (146) with housing unit (122 and 124). Electrical insulator (170) prevents electrical contact between two units. Fuel inlet manifold (134) allows fuel to communicate with internal space (138) between the anodes (154 and 156). Electrically insulating members (164 and 166) prevent the current collector from being in electrical contact with the anode.

US 2012/034547 A1 discloses a structure of a fuel cell. On each of upper and lower surfaces of a flat-plate-like support substrate having a longitudinal direction and having fuel gas flow channels formed therein, a plurality of power-generating elements A connected electrically in series are disposed at predetermined intervals along the longitudinal direction. On each of the upper and lower surfaces of the support substrate, a plurality of recesses are formed at predetermined intervals along the longitudinal direction. Each of the recesses is a rectangular-parallelepiped-like depression defined by four side walls arranged in a circumferentially closed manner and a bottom wall. That is, in the support substrate, frames are formed to surround the respective recesses. Fuel electrodes of the power-generating elements A are embedded in the respective recesses.

JP 2017134941 A provides a fuel battery single cell which can improve the efficiency in supplying and discharging fuel gas. A fuel battery single cell 1 comprises an anode 2, a solid electrolyte layer 3, and a cathode 5. The anode 2 internally has a plurality of thickness direction passages 21 and a plurality of surface direction passages 22. The thickness direction passages 21 are arranged along an anode thickness direction, and each of them has a layer surface opening 212 on a layer surface 211 which is on the opposite side to the solid electrolyte layer 3 side. The surface direction passages 22 are arranged along an anode surface direction, and each of them has a lateral surface opening 222 on a lateral surface 221 of the anode 2. In the fuel battery single cell 1, the lateral surface 221 of the anode 2 excluding the lateral surface opening 222 is covered with a dense body 6 capable of sealing gas.

### SUMMARY

In order to address the aforementioned problems existing in the prior art, an objective of the present disclosure is to propose a solid oxide cell (SOC) chip. The present disclosure constructs a smooth and low-resistance gas transmission channel for a rapid electrode reaction, and ensures sufficient structural strength of the SOC. The SOC chip according to the present disclosure is also referred to as a "cell chip" or simply referred to as a "cell".

The objective of the present disclosure is achieved through the following technical solution. A preparation method of a high-temperature SOC chip includes the following steps:
(1) substrate preparation: preparing thin film substrates of the inner electrode and the electrolytes separately: adding polyvinyl butyral (PVB), triethanolamine, and ethanol in proportion in each component constituting the inner electrode and the electrolytes, and conducting a tape casting operation, and preparing a gas path precursor on a portion of the substrate as required;
(2) substrate lamination: aligning and laminating an electrolyte substrate, an inner electrode substrate with the gas paths, and an inner electrode substrate without the gas paths in a certain order to form a substrate laminate; putting the substrate laminate into a vacuum bag for vacuuming and sealing; and placing the substrate laminate in the vacuum bag into a press machine to form a fused laminate after subjecting to a water bath of 75°C and 20 MPa for 5 min;
(3) cutting: putting the fused laminate into a cutting machine, and cutting the fused laminate into an SOC chip blank with a specified design shape;
(4) sintering: putting the SOC chip blank into a high-temperature furnace, and sintering the SOC chip blank according to a suitable heat treatment regime to form a high-strength SOC chip, where during heat treatment, the gas path precursor is gasified and escapes to leave regular and even gas paths in the SOC chip, wherein the sintering is performed at 1,400°C for 2 h;
(5) preparation of the intermediate layer: preparing, after the sintering, the intermediate layer on the two electrolytes of the SOC chip by drying at 90°C for 1 h, putting to the high-temperature furnace, raising the furnace temperature to 1,300°C for sintering for 2 h, and dropping the furnace temperature to room temperature at a rate not exceeding 5°C/min;
(6) reduction: putting, after the preparation of the intermediate layer, the SOC chip into a reduction furnace to reduce a nickel oxide in the inner electrode into nickel, where the reduction of the SOC chip is conducted before the SOC chip is used or assembled into a stack, as mentioned herein, or is conducted by overall reduction of the stack after the SOC chip is assembled into the stack, wherein the reduction is performed at 680°C for 6 h in a reducing atmosphere formed by a mixture of hydrogen and nitrogen, including 70-100% of hydrogen and 0-30% of nitrogen;
(7) preparation of the outer surface elements: printing, after the reduction, the outer surface elements on an outer surface of the SOC chip, including the outer collector, the outer electrode, the outer electrode plate, the inner electrode plate, an outer electrode bus bar, an inner electrode bus bar, and the protective layer, where the outer surface elements are all printed on the intermediate layer, or partially or completely printed on a surface of the electrolyte; and various slurries used include a pore forming agent that takes a mixture of ethanol and terpineol as a solvent and includes about 0-10% of graphite;
(8) preparation of the side sealing members: preparing, after the preparation of the outer surface elements and the side sealing members, each including two sub-layers, namely an inner side sealing layer and an outer side sealing layer: preparing the inner side sealing layer by coating, preferably, graphite (C) or magnesium silicate talc (Mg₆)[Si₈]O₂₀(OH)₄); and preparing, after the inner side sealing layer is dried, the outer side sealing layer on the inner side sealing layer by coating, preferably, potash-lime glass, including 12-18% of K₂O, 5-12% of CaO, and 60-75% of SiO₂;
(9) heat treatment: subjecting, after the preparation of the outer surface elements and the side sealing members, the SOC chip to heat treatment, such that the outer surface elements are firmly connected to respective attachments, and at least one sub-layer of the side sealing member is densified, where preferably, the heat treatment is conducted at 850°C for 1 h in a reducing protective atmosphere including 5-60% of hydrogen, with the balance being nitrogen; and
(10) electrode strengthening by Samaria doped ceria (SDC) impregnation: conducting, after the heat treatment, electrode strengthening to further improve an electrical performance of the SOC chip and reduce an internal resistance of the SOC chip, where the SOC chip is ready to be put into a practical application after the heat treatment; and a typical electrode strengthening treatment method includes impregnation.

The objective of the present disclosure can also be achieved through the following technical solution. An SOC chip with a double-electrolyte structure , obtainable by the method presented above, includes two electrolytes, where the two electrolytes are separated by an inner electrode sandwiched between the two electrolytes; the inner electrode is provided therein with regularly arranged gas paths; at least two sides of the inner electrode are covered with side sealing members; outer surfaces of the electrolytes are provided with outer surface elements; the outer surface elements include an intermediate layer, an outer electrode, an inner electrode plate, and an outer electrode plate; the inner electrode is connected to the inner electrode plate; and the outer electrode is connected to the outer electrode plate.

There is an oxygen partial pressure difference between the inner electrode and the outer electrode. The outer electrode can be designed as an oxygen-rich electrode, while the inner electrode can be designed as an oxygen-deficient electrode. Alternatively, according to an operational requirement, the outer electrode can be designed as an oxygen-deficient electrode, while the inner electrode can be designed as an oxygen-rich electrode.

In the SOC chip with a double-electrolyte structure, each of the plurality of regularly arranged gas paths in the inner electrode has an equivalent cross-sectional diameter of 20-200 µm.

In the SOC chip with a double-electrolyte structure, the side sealing members each include a plurality of sub-layers; at least one of the plurality of sub-layers is a dense and tight sub-layer; and at least one rough and non-tight sub-layer is provided between the dense and tight sub-layer and a side of the SOC chip.

In the SOC chip with a double-electrolyte structure, the outer surface elements further include a plurality of outer collectors covering an outer surface of the outer electrode; and conductivity of each of the outer collectors is not less than conductivity of the outer electrode.

In the SOC chip with a double-electrolyte structure, the outer surface elements further include a protective layer; and the protective layer covers at least one of the outer surface elements.

In the SOC chip with a symmetrical double-electrolyte structure, the inner electrode and the inner electrode plate are connected through an inner bus bar; and conductivity of the inner bus bar is not less than conductivity of the inner electrode.

In the SOC chip with a double-electrolyte structure, the inner bus bar is located between the side sealing member and a side of the SOC chip.

In the SOC chip with a symmetrical double-electrolyte structure, a main body of the inner bus bar is located on an outer surface of the electrolyte and connected to the inner electrode through the electrolyte.

In the SOC chip with a double-electrolyte structure, an inner collector penetrates the electrolyte and is separately sealed with a sealing material to prevent gas leakage.

In the SOC chip with a double-electrolyte structure, the SOC chip is in a long strip shape that is gradually narrowed from an outer electrode region in a central part of the SOC chip to an end surface of the SOC chip provided with a gas path inlet and outlet.

The SOC chip prepared by the present disclosure includes an operating hot end and a cold end for achieving external connection and sealing. In addition, the SOC chip prepared by the present disclosure also has the following characteristics.
1) The two electrolytes are separated by the inner electrode sandwiched between the two electrolytes, and the inner electrode is provided therein with regularly arranged micro gas paths. The side of the end surface of the SOC chip without a gas path inlet or outlet can also be provided with a gas path outlet, so as to significantly reduce the preparation steps of the SOC chip, improve the production efficiency of the SOC chip, and reduce the production cost of the SOC chip.
2) The inner electrode may include multiple layers. For example, the inner electrode may include an active inner electrode and a supporting inner electrode. The active inner electrode is more conducive to the electrochemical reaction in terms of formula, while the supporting inner electrode is more conducive to improving the overall strength and/or conductivity of the SOC chip in terms of composition.
3) The number and position of the regularly arranged micro gas paths can be adjusted as needed, and the gas paths can be very close to the electrolytes. Therefore, the supply rate of the feed gas or the removal rate of the product gas in electrode reaction does not decrease with the increase of the thickness of the inner electrode, but rather increases with the increase of the thickness of the inner electrode. In addition, the overall conductivity of the inner electrode and the strength of the SOC chip increase with the increase of the thickness of the inner electrode.
4) The internal gas paths are arranged in a regular manner. The equivalent cross-sectional diameter of a single gas path is 20-200 µm, preferably 30-60 µm. If the cross-sectional area of the gas path is too large, the strength of the SOC chip will decrease, causing it to be fragile and significantly reducing the yield of the SOC chip. If the cross-sectional area of the gas path is too small, the gas flow pressure drop during the operation of the SOC chip will be too large. According to the actual test results, the equivalent diameter of a single gas path should be controlled within 30-60 µm. Meanwhile, a single SOC chip should include more than 6 gas paths to ensure that the SOC chip has a certain ventilation capacity and sufficient power.
5) The side of the SOC chip without a gas path wall is provided with a specialized sealing structure, which may include multiple sub-structures, but the materials and microstructures of each sub-structure are not the same. Different sub-structures can achieve different functions. For example, the sub-structure located in the innermost layer is mainly used to enhance the contact with the bottom surface for sealing, with low requirements for tightness, while the sub-structure located in the outermost layer is used to achieve sealing with high tightness requirements. According to functional needs, more sub-structures can also be embedded in the outermost and innermost layers. However, at least one of the sub-layers of the side sealing member is dense and tight.
6) An inner electrode collector structure can be provided. It has a high conductivity and is used to reduce the current collection resistance of the inner electrode. The inner electrode collector structure can be located inside the sealing layer, fit to a side of the inner electrode, or in other positions, such as a surface of the SOC chip. Preferably, the inner electrode collector structure is made of a coating based on silver (Ag) or nickel (Ni). The silver (Ag) and nickel (Ni) are less costly than precious metals such as platinum (Pt), and they have high conductivity. Due to the fact that the coating is only applied on the side of the SOC chip, there are no structural requirements and there is a large space for adjusting the material composition. The conductivity of the inner electrode collector structure can be much higher than that of commonly used nickel electrode materials. For example, the conductivity of a nickel electrode is about 250 S/cm, while the silver and nickel collector coatings can achieve a conductivity of 6 × 10⁵ S/cm and 1 ×10⁵ S/cm, respectively. In the same situation, when silver (Ag) is used as a side current collector coating, the line resistance is about 17 mOhm, while when nickel (Ni) is used as a side current collector coating, the line resistance is about 100 mOhm (the line width is 1 mm, the line thickness is 0.1 mm, and the line length is 10 cm). The line resistance in both cases is significantly lower than the current collection resistance of the nickel electrode (approximately 400 mOhm). Obviously, such an inner electrode collector structure can save costs and significantly reduce the current collection resistance of the inner electrode in the SOC chip.
7) The SOC chip can adopt a tapered design. That is, the operating surface of the SOC chip on the hot end is wider, but the width of the SOC chip gradually decreases along the gas flow direction of the inner electrode until it reaches the cold end of the SOC chip. Due to the gradual reduction design, the SOC chip has the largest possible operating area in the high-temperature region. In the transition region from high temperature to low temperature, the heat transfer cross-sectional area of the SOC chip gradually decreases. The heat loss of the SOC chip caused by thermal conduction is slowed down, effectively improving the power output of the SOC chip. According to the test results, compared to a single SOC chip designed with a rectangular shape or an equal width, a single SOC chip designed with a gradual reduction width can increase the output power by up to 10%. However, the gradual reduction design of the SOC chip will cause an increase in the gas flow resistance of the inner electrode, that is, an increase in the pressure drop when the gas from the inner electrode flows through the SOC chip. The actual test and fluid mechanics simulation calculation show that when the angle between the tapered edge of the SOC chip and the straight edge of the operating surface on the hot end is 5-60°, preferably 10-30°, the pressure drop of the inner electrode is reduced.

According to functional division, the SOC chip prepared by the present disclosure includes multiple components. Except for the intermediate layer, the structural components located outside the SOC chip and directly or indirectly attached to the electrolyte are referred to as the outer surface elements of the SOC chip. The functions and material composition of each component are as follows.
1) Inner and outer electrode plates. The inner and outer electrodes of the SOC chip are boundary components that enable electrical connection with external devices. Preferably, they are prepared from materials with high conductivity and oxidation resistance, such as materials based on elements such as silver (Ag), nickel (Ni), gold (Au), platinum (Pt), rhodium (Ph), palladium (Pd), chromium (Cr), and tungsten (W).
2) Inner electrode. The gas flows through the inner electrode for the electrochemical reaction, and the inner electrode undergoes an electrochemical process. The inner electrode provides the overall structural strength of the SOC chip and at least partially provides a current transfer channel. The inner electrode may include different sub-layer structures to achieve three functions: electrochemical reaction, strength support, and current transfer. The different sub-layers of the inner electrode can be made of materials with similar compositions. Preferably, the inner electrode includes two sub-layers, namely the active inner electrode and the supporting inner electrode. The component design of the active inner electrode is more conducive to the electrochemical reaction, for example, the active inner electrode includes 50-60% of 8YSZ and 40-50% of nickel (Ni). The component design of the supporting inner electrode is more conducive to electron transfer and the strength support of SOC chip, for example, the supporting inner electrode includes 30-50% of 3YSZ and 50-70% of nickel (Ni). In addition to the basic composition of nickel (Ni) and YSZ, the inner electrode may also include a small amount of other additives, such as platinum, ceria, alumina, magnesium oxide, lanthanum oxide, strontium titanate, or compounds based on these additives. The content of these additives is usually below 5%, but they can improve the electrochemical activity and high-temperature stability of the inner electrode.
3) Gas paths. The gas paths provide the inner electrode with the necessary raw material supply and product removal channels for the electrode process. The gas paths extend throughout the entire inner electrode and extend to the edge of the SOC chip. The equivalent diameter of a single gas path is 20-200 µm, preferably 30-60 µm, to ensure that the gas path spread throughout the inner electrode does not significantly reduce the strength of the inner electrode. With the design of the regularly arranged micro gas paths, a thicker inner electrode can accommodate more gas paths to ensure more sufficient gas supply and greater strength of the SOC chip.
4) Electrolytes. The electrolytes serve as a separator between the inner electrode and the outer electrode, providing the ion channels required for the continuous electrode reaction. A smaller conductivity of the electrons in the electrolyte indicates a higher tightness. Preferably, the electrolytes use stabilized zirconia, especially YSZ, as the basic raw material.
5) Inner collector. The inner collector is tightly attached to the inner electrode or forms a part of the inner electrode, providing the required fast electron transfer channel for the electrode reaction of the inner electrode. The inner collector prepared from an appropriate material and provided at an appropriate position can effectively increase the overall conductivity of the inner electrode, thereby reducing the internal resistance of the SOC chip, especially the internal resistance of the collector. Preferably, the inner collector has a higher electronic conductivity than the inner electrode. For example, the inner collector can be made of a high-temperature oxidation-resistant metal material or an alloy thereof. Such a metal material includes silver (Ag), nickel (Ni), gold (Au), platinum (Pt), rhodium (Ph), palladium (Pd), chromium (Cr), and tungsten (W), etc. The inner collector can also be made of an oxide such as strontium titanate that has high-temperature conductivity in a reducing atmosphere. Preferably, the inner collector can be provided on the side of the end surface of the SOC chip without a gas path inlet or outlet, or on other parts of the SOC chip, such as the surface of the SOC chip where the outer electrode is located. The inner collector can be a specialized component of the SOC chip or formed by the inner electrode.
6) Inner bus bar. The inner bus bar constitutes an electron transfer channel connecting the inner collector and the inner electrode plate. In order to carry the current of the inner electrode, the inner bus bar generally has a large cross-sectional area and high conductivity to ensure a low resistance during electron transfer. Preferably, the inner bus bar has a higher electronic conductivity than the inner electrode. In terms of material composition, the inner bus bar can be made of a metal resistant to high-temperature oxidation, such as silver (Ag), nickel (Ni), gold (Au), platinum (Pt), rhodium (Ph), palladium (Pd), chromium (Cr), tungsten (W), copper (Cu) or an alloy thereof. It can also be made of a compound including such a metal and a known high-temperature conductive oxide such as strontium titanate, doped ceria or stabilized zirconia.
7) Intermediate layer. The intermediate layer can promote the contact between the outer surface element of the SOC chip and the electrolyte, reducing or avoiding the reaction that may occur between the outer surface element and the electrolyte at high temperatures. After high-temperature sintering, the electrolyte of the SOC chip is usually dense and smooth, which is not conducive to good contact between the outer surface element and the electrolyte. The preparation and use of the SOC chip involves a high temperature, for example, the highest temperature during the preparation of the SOC chip can reach 1,500°C. During long-term use, the SOC chip is also maintained at 500-1,000°C. Under such conditions, the outer surface element of SOC chip is likely to react with the electrolyte, resulting in degradation in the performance of the SOC chip. To avoid or alleviate the problem, the intermediate layer is introduced. The intermediate layer ensures that the outer surface element of the SOC chip and the electrolyte remain chemically stable at high temperatures, and has a rough surface after preparation to achieve good contact with each outer surface element. The intermediate layer can be prepared between the outer electrode and the electrolyte, as well as between each outer surface element and the electrolyte. These outer surface elements include the outer electrode, the inner/outer electrode plate, the inner/outer bus bar, the inner/outer collector, the protective layer, and the sealing structure, etc. Preferably, the intermediate layer is made of a compound including doped ceria (such as SDC or GDC) and stabilized zirconia (such as YSZ or ScYSZ).
8) Outer electrode. The outer electrode provides a place for the gas flowing through the outside of the SOC chip to undergo the electrochemical reaction and a place for the electrode process. Preferably, the outer electrode is made of a compound including doped ceria and an antioxidant metal such as Ag, Pt, Pd, etc. It can also be made of a known electrode material used for the SOC technique, for example, an oxide such as LaSrMnO, LaSrCoFeO, and LaNiFeO, or a compound including the oxide. In addition, the preparation process of the outer electrode can use various known electrode strengthening processes, such as impregnation with an active oxide.
9) Outer collector. The outer collector is tightly attached to the outer electrode or forms a part of the outer electrode, providing a fast electron transfer channel for the electrode reaction required by the outer electrode. Preferably, the outer collector is made of a compound including a high-temperature oxidation-resistant metal such as silver (Ag), nickel (Ni), gold (Au), platinum (Pt), rhodium (Ph), palladium (Pd), chromium (Cr), or tungsten (W), or an alloy of such a metal, and a known high-temperature conductive oxide, such as strontium titanate, doped ceria, and stabilized zirconia. Preferably, the outer collector is provided on the outer or inner surface of the outer electrode. That is, the outer collector is located between the outer electrode and the electrolyte or between the outer electrode and the intermediate layer. Preferably, the outer collector is provided in a grid form to enhance the current collection effect.
10) Protective layer. The protective layer directly or indirectly covers and protects various outer surface elements, including the outer electrode. The outer surface elements covered by the protective layer include the outer electrode, the inner/outer electrode plate, the inner/outer bus bar, the inner/outer collector, the protective layer, the side sealing member, and the sealing structure. The protective layer improves the high-temperature stability of various outer surface elements, including the outer electrode, by inhibiting the evaporation and loss of the effective component. The protective layer also enhances the resistance of each outer surface element to external gas impurities such as dust or water vapor, or other gas impurities that can easily cause failure of the outer surface element, such as aromatic hydrocarbons, silane, or CO, through physical filtration or chemical absorption. This can improve the operating stability of the SOC chip and effectively extend its service life. Preferably, the protective layer can be prepared from an oxide and/or metal such as alumina, zirconia, ceria, silicon oxide, platinum, palladium, rhodium, etc. that can maintain stable properties under high temperature conditions.
11) Outer bus bar. The outer bus bar constitutes an electron transfer channel that connects the outer collector with the outer electrode plate. In order to carry the current of the outer electrode, the outer bus bar generally has a large cross-sectional area and high conductivity to ensure a low resistance during electron transfer. Preferably, the outer bus bar has a higher conductivity than the outer electrode. The outer bus bar is made of a compound including a metal such as silver (Ag), nickel (Ni), gold (Au), platinum (Pt), rhodium (Ph), palladium (Pd), chromium (Cr), tungsten (W), or copper (Cu), or an alloy of such a metal, and a known high-temperature conductive oxide such as strontium titanate, doped ceria, and stabilized zirconia.
12) Side sealing members. The side sealing members are used for gas isolation and sealing of the end surface of the SOC chip without a gas path inlet or outlet, and each can include plurality of sub-layers. Preferably, the side sealing member includes two sub-layers, namely the inner side sealing layer and the outer side sealing layer. The inner side sealing layer covers the side of the inner electrode, located between the inner electrode and the outer side sealing layer, to increase the leaking resistance of the gas flowing through the inner electrode from the side of the SOC chip. The inner side sealing layer has good contact with the outer side sealing layer and maintains chemical stability with the outer side sealing layer, avoiding structural damage of the inner and outer side sealing layers caused by a chemical reaction at high temperatures. Preferably, the inner side sealing layer can be made of graphite (C) or magnesium silicate talc (Mg₆)[Si₈]O₂₀(OH)₄. The outer side sealing layer is located at the outermost layer of the side sealing member, which is a dense sealing structure that prevents gas flowing through the gas path of the inner electrode from leaking to the outside of the SOC chip. Preferably, the outer side sealing layer can be made of a material based on graphite (C) or potash-lime glass. If potash-lime glass is used, the preferred material composition of the outer side sealing layer includes 12-18% of K₂O, 5-12% of CaO, and 60-75% of SiO₂.

It should be pointed out that these components are divided based on different executive functions, rather than their positions or material composition. During the implementation process, different functional components may be prepared from similar or even identical materials through the same preparation process. In this case, different components may have the same or similar structural features, making them indistinguishable in terms of microstructure features. For example, even if the outer electrode, the outer collector, and the outer bus bar have different functions, they may still be prepared from the same material, for example, a compound including 70% of Ag and 30% of SDC, through the same preparation process, such as screen printing, in the same preparation step.

Compared with the prior art, the present disclosure has the following advantages:
1. The regularly arranged micro gas paths inside the inner electrode significantly reduce the resistance of the gas flowing through the inner electrode, and help to evenly distribute the gas flowing through the inner electrode to the electrolyte-electrode boundary, making the electrode reaction more thorough and improving the electrical efficiency of the SOC chip.
2. The inner electrode can include a plurality of sub-layers, such as the active inner electrode and the supporting inner electrode. The active inner electrode is more conducive to the electrochemical reaction in terms of formula, while the supporting inner electrode is more conducive to improving the overall strength and/or conductivity of the SOC in terms of composition.
3. The inner electrode can also serve as a support between two electrolytes, making the electrolyte relatively thin and ensuring a high yield.
4. The side sealing member is provided with a multi-layer structure. The inner sub-layer increases the leaking resistance of the gas flowing through the inner electrode, and is different from the outer sub-layer in terms of material composition and structure. The outer sub-layer plays a role of sealing the gas leaking after depressurization and maintains a high structural strength.

### BRIEF DESCRIPTION OF THE DRAWINGS

FIG. 1 is a cross-sectional view of a typical SOC in the prior art;
FIG. 2 is a top view of an SOC chip according to a first embodiment of the present disclosure;
FIG. 3 is a side view of an end of the SOC chip according to the first embodiment of the present disclosure;
FIG. 4 is a section view of the SOC chip according to the first embodiment of the present disclosure;
FIG. 5 is a top view of an SOC chip according to a second embodiment of the present disclosure;
FIG. 6 is an exploded view of the SOC chip according to a second embodiment of the present disclosure;
FIG. 7 is a top view of an SOC chip according to a third embodiment of the present disclosure; and
FIG. 8 is a top view of an SOC chip according to a fourth embodiment of the present disclosure.

Reference Numerals: 1. electrolyte; 2. inner electrode; 201. supporting inner electrode; 202. active inner electrode; 3. outer electrode; 4. side sealing member; 401. inner side sealing layer; 402. outer side sealing layer; 5. intermediate layer; 6. inner electrode plate; 7. outer electrode plate; 8. inner bus bar; 9. outer bus bar; 10. sealing structure; 11. gas path; 12. outer collector; 13. protective layer; 14. inner collector; and 15. connecting piece.

### DETAILED DESCRIPTION OF THE EMBODIMENTS

The technical solutions of the present disclosure are described in further detail below with reference to the specific examples and accompanying drawings, but the present disclosure is not limited thereto.

### First Embodiment

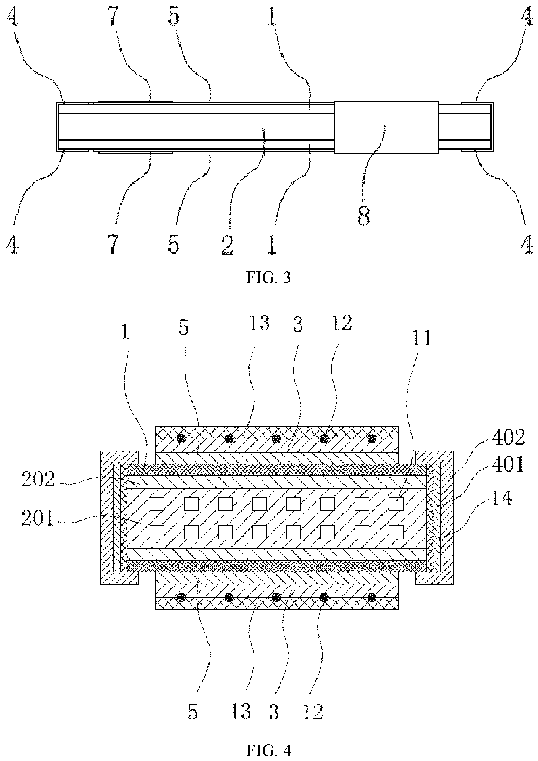

As shown in FIGS. 2 and 3, the first embodiment provides an SOC chip. The SOC chip has a rectangular strip structure, and includes two electrolytes 1 separated in a thickness direction. Inner electrode 2 is provided between the two electrolytes 1. Two sides of the inner electrode 2 are respectively covered by side sealing members 4. Outer surfaces of the electrolytes 1 are provided with outer surface elements, including intermediate layer 5, outer electrode 3, inner electrode plate 6, and outer electrode plate 7. The inner electrode 2 is connected to the inner electrode plate 6, and the outer electrode 3 is connected to the outer electrode plate 7.

As shown in FIG. 4, regularly arranged micro gas paths 11 are provided inside the inner electrode 2. The side sealing members 4 each include two sub-layers, namely inner side sealing layer 401 and outer side sealing layer 402. The inner side sealing layer 401 and the outer side sealing layer 402 are made of materials different from those of the electrolytes 1 and the inner electrode 2. The outer side sealing layer 402 is dense and tight, while the inner side sealing layer 401 is rough and non-tight. The inner electrode and the outer electrode are provided with respective electrode plates to facilitate the connection between the SOC chip and the outside. The outer electrode plate 7 and the outer electrode 3 are connected through outer bus bar 9. The inner electrode 2 includes supporting inner electrode 201 and active inner electrode 202. The inner electrode 2 and the inner electrode plate 6 are connected through inner bus bar 8. An outer surface of the outer electrode 3 is provided with outer collector 12. The outer collector 12 and the outer electrode 3 are covered with protective layer 13. The inner electrode plate 6, the outer electrode plate 7, the outer electrode 3, and the outer bus bar 9 are all located on the intermediate layer 5 and do not come into direct contact with the electrolyte 1. In the first embodiment, the inner electrode plate 6 and the outer electrode plate 7 are arranged at a same end of the SOC chip, and the inner collector 14 is buried in the side sealing member 4.

A preparation process of the SOC chip in the first embodiment includes the following steps.
1) Substrate preparation. There are three types of substrates: a supporting inner electrode substrate, an active inner electrode substrate, and an electrolyte substrate. The preparation of each substrate is as follows.
   (a) Slurry preparation. An appropriate amount of an organic additive and a solvent, such as polyvinyl butyral (PVB), triethanolamine, and ethanol, is added to a fine ceramic powder such as 8YSZ, NiO, and GDC. Ball milling and mixing are conducted, such that the fine ceramic powder is evenly dispersed to form stable slurry. In typical slurry of the active inner electrode, a weight ratio of the solid active components is 8YSZ:NiO:GDC=5:4:1, allowing for a variation range of about 20%. In typical slurry of the supporting inner electrode, a weight ratio of the solid active components is 8YSZ:NiO:Al₂O₃=3.5:5.5:1, allowing for a variation range of about 20%. The content of the NiO in the slurry of the supporting the inner electrode is slightly higher, such that the inner electrode has a higher conductivity after reduction. In typical slurry of the electrolyte, the solid active component is 8YSZ or ScYSZ.
   (b) Substrate preparation. Thin films of the electrolyte and the inner electrode are prepared from the slurry prepared in Step (a) through a tape casting machine. A typical electrolyte film has a thickness of 5-40 µm, and a typical inner electrode film has a thickness of 100-200 µm. The film is dried at 60°C for 2 h and cut to a sheet referred to as a substrate with a certain size such as 270 mm × 220 mm. Correspondingly, the substrate prepared from the active inner electrode slurry is referred to as the active inner electrode substrate, the substrate prepared from the supporting inner electrode slurry is referred to as the supporting inner electrode substrate, and the substrate prepared from the electrolyte slurry is referred to as the electrolyte substrate.
   (c) Preparation of a gas path precursor. The gas path precursor of the SOC chip is prepared on the supporting inner electrode substrate. A typical gas path precursor is made of slurry including graphite, starch, or other polymer powder such as polytetrafluoroethylene (PTFE) or polyvinyl chloride (PVC). The content of the solid powder such as graphite, starch, PTFE or PVC in the slurry is preferably 5-30%, and the solvent is made of terpineol. The method for preparing the gas path precursor on the inner electrode substrate includes a well-known method in the industry, such as screen printing or high-temperature pressing.
2) Substrate lamination. According to the order shown in FIG. 4, the electrolyte substrate, the active inner electrode substrate, the supporting inner electrode substrate with the gas path precursor, and the supporting inner electrode substrate without the gas path are aligned and laminated to form a substrate laminate. The substrate laminate is put into a vacuum bag for vacuuming and sealing. The vacuum bag with the substrate laminate is put into an isostatic press, and is subjected to a water bath of 75°C and 20 MPa for 5 min. After the water bath, the substrate laminate is taken out. During isostatic pressing, the various substrates in the substrate laminate are fused with each other to form a fused laminate. The fused laminate has a thickness of about 2 mm, and each constituent layer cannot be partially or completely separated into a single substrate.
3) Cutting. The fused laminate prepared in the above step is put into a cutting machine and cut into an SOC chip blank with a specified design shape through a cutting die. Typically, a single fused laminate can be cut into three 65 mm × 260 mm SOC chip blanks.
4) Sintering. The SOC chip blank is put into a high-temperature furnace, and is subjected to high-temperature sintering according to a suitable heat treatment regime. After high-temperature sintering, such as sintering at 1,400°C for 2 h, the size of the SOC chip blank shrinks by 20-30%, thus forming a high-strength SOC chip. During the heat treatment process, due to the vaporization and escape of the gas path precursor, regular and even micro gas paths are left in the SOC chip.
5) Preparation of the intermediate layer. The intermediate layer is printed on the electrolyte on either side of the SOC chip formed by sintering. Typically, the intermediate layer is made of doped ceria, such as GDC or SDC, through a printing method, such as a well-known screen printing process in the industry. The SOC chip printed with the intermediate layer is dried at 90°C for 1 h. Then, the SOC chip is put into a high-temperature furnace, and the furnace temperature is raised to 1,300°C. After 2 h of sintering, the furnace temperature is dropped, at a rate not exceeding 5°C/min. When the furnace temperature drops to room temperature, the SOC chip is taken out. At this point, the intermediate layer on either side is firmly sintered onto the outer surface of the electrolyte of the SOC chip.
6) Reduction. After the preparation of the intermediate layer, the SOC chip is put into a reduction furnace, and is subjected to reduction at 680°C for 6 h in a reducing atmosphere formed by a mixture of hydrogen and nitrogen, including 70-100% of hydrogen and 0-30% of nitrogen. After the reduction, the nickel oxide in the inner electrode of the SOC chip is reduced to nickel. Thus, an additional gas path is formed in the inner electrode. In addition, since nickel is an electronic conductor, the inner electrode after reduction has the ability to conduct electricity. Therefore, the inner electrode can provide a high-temperature region for the electrochemical reaction and an electron transfer channel between the inner electrode plates for external connection.
7) Preparation of the outer surface elements. After the reduction, the outer surface elements, including the outer collector, the outer electrode, the outer electrode plate, the inner electrode plate, the outer electrode bus bar, the inner electrode bus bar, and the protective layer, are printed on the outer surface of the SOC chip. These elements all can be printed on the intermediate layer, or partially or completely printed on the surface of the electrolyte. Due to the fact that the SOC chip is provided with opposite electrolytes on the two sides, the outer surface elements located on one side of the SOC chip can be prepared sequentially after the preparation of the outer surface elements located on the other side of the SOC chip.
   Among the outer surface elements of the SOC chip, the outer collector, the outer electrode plate, the inner electrode plate, the outer electrode bus bar, and the inner electrode bus bar are made of materials that the same or similar. For example, they include 5-20% of doped ceria (SDC or GDC) and 80-95% of silver, and can be printed through the same screen in the same step. The outer electrode includes 30-55% of doped ceria (SDC or GDC) and 45-70% of silver. The outer electrode can be printed before or after the printing of the outer collector, but there needs to be a hot air drying process at 90°C for 1 h between the printing of the outer electrode and the printing of the outer collector. The protective layer includes aluminum oxide, zirconia, silicon dioxide, or a compound including such an oxide, preferably aluminum oxide. The slurry prepared from such an oxide is printed or sprayed on other outer surface element after drying. The slurry used in this step may include a pore forming agent that takes a mixture of ethanol and terpineol as the solvent and includes about 0-10% of graphite.
8) Preparation of the inner bus bars. After the printing of the outer electrode and other components, the inner collector of the SOC chip is prepared. Firstly, the inner collector slurry is applied on the side of the SOC chip. The basic components of the inner collector slurry include 5-20% of doped ceria (SDC or GDC) and 80-95% of silver. After the inner collector slurry is applied, the SOC chip is dried by 90° hot air for 1 h until the inner collector slurry is cured.
9) Preparation of the side sealing members. After the preparation of the inner collector, the inner side sealing layer is prepared. The inner side sealing layer can be prepared on the inner collector, and its basic component is graphite or magnesium silicate talc (Mg₆)[Si₈]O₂₀(OH)₄). The inner side sealing layer is dried with 90° hot air for 1 h. Then, the outer side sealing layer is prepared on the inner side sealing layer, and its basic component is graphite or potash-lime glass, including 5-12% of K₂O, 12-18% of CaO, and 60-75% of SiO₂.
10) Heat treatment. After the printing of the outer surface elements and the preparation of the side sealing members, the SOC chip is heat-treated to ensure that each outer surface element is firmly connected to its attachment and at least the outermost layer of the side sealing member is densified. Preferably, the heat treatment is conducted at 850°C 1 h in a reducing protective atmosphere, which includes 5-60% of hydrogen, with the balance being nitrogen.
11) Electrode strengthening. After the heat treatment, the SOC chip is ready for practical applications. To further improve the electrical performance of the SOC chip and reduce the internal resistance, electrode strengthening is conducted. A typical electrode strengthening method includes impregnation. For example, in SDC impregnation, first, Sm(NO₃)₂ and Ce(NO₃)₄ are dissolved in a certain ratio (such as a molar ratio of Sm₂O₃:CeO2=20:80) in an aqueous solution (or dilute nitric acid with a pH of about 5). Then, the solution is coated on the inner electrode and the outer electrode and subjected to heat treatment (such as 500 or 300°C heat treatment for 20 min). Sm(NO₃)₂ and Ce(NO₃)₄ are decomposed to form a stabilized compound, SDC, with a certain proportion of Sm₂O₃:CeO2. This process can be repeated 3-5 times to increase the impregnation amount of SDC. The SDC is a known oxide with good catalytic activity and ion/electron mixed conductivity. After the impregnation treatment, the SDC can be dispersed into the electrode at a very small nanoscale, such as less than 100 nm, greatly expanding the reaction region of the electrode process, namely triple phase boundary (TPB, i.e. a gas-solid electrochemical site). It can significantly reduce the resistance of the electrode process and reduce the internal resistance of the SOC chip, which is well-known in the industry.

### Second Embodiment

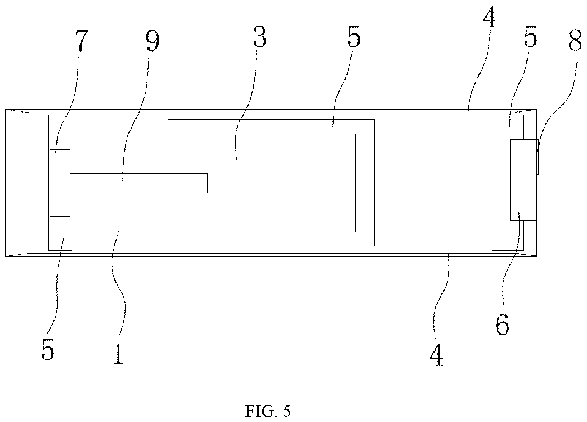

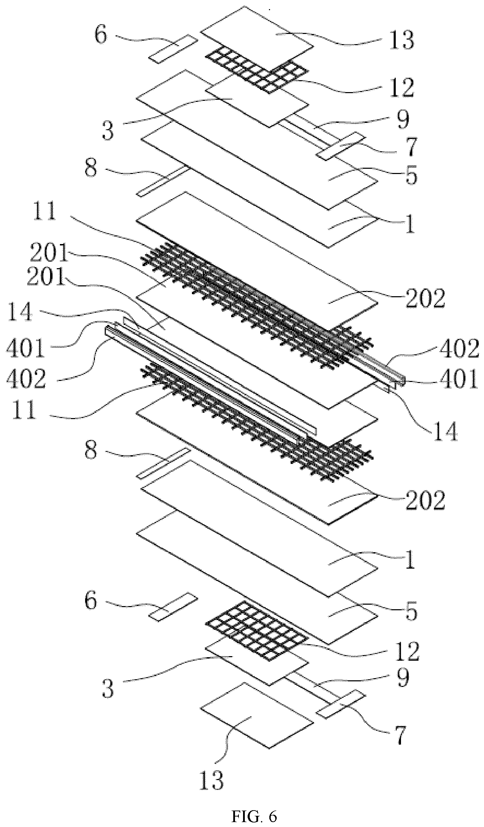

Referring to FIGS. 5 and 6, the structure of the SOC chip in the second embodiment is basically the same as that in the first embodiment, with the following differences. The intermediate layer 5 can cover an entire outer wall of the electrolyte 1 or partially cover the electrolyte 1. The inner electrode plate 6 connected to the inner electrode 2 and the outer electrode plate 7 connected to the outer electrode 3 are respectively arranged at two ends of the SOC chip. The inner bus bar 8 is located on an end surface of the SOC chip.

### Third Embodiment

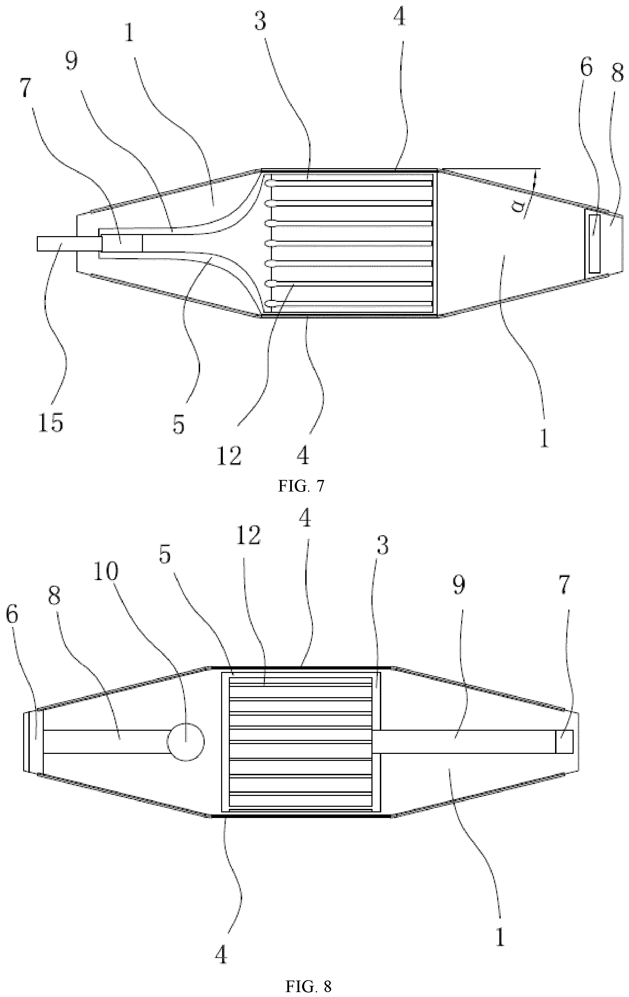

Referring to FIG. 7, the structure of the SOC chip in the third embodiment is basically the same as that in the second embodiment, with the following differences. In the third embodiment, the two ends of the SOC chip adopt a tapered design. A tapered edge and a straight edge of the operating surface on the hot end are at an angle α of 5-60°, preferably 10-30°. During operation, the temperature difference between the gas inlet or outlet of the inner electrode 2 and a central part of the outer electrode is at least 200°C. This design ensures a desired operating state of the SOC chip. In the third embodiment, the outer collector 12 is located on the outer surface of the outer electrode 3. Connecting piece 15 is welded on the outer electrode plate 7 for external connection. Preferably, the connecting piece 15 is made of copper, nickel, gold, or silver.

### Fourth Embodiment

Referring to FIG. 8, the structure of the SOC chip in the fourth embodiment is basically the same as that in the third embodiment, with the following differences. In the fourth embodiment, the inner bus bar 8 is located on a surface of the SOC chip, and is provided with a high-temperature end connected to the inner electrode 2 through an opening on the surface of the electrolyte 1. The open surface of the electrolyte 1 is further covered with sealing structure 10. The sealing structure 10 penetrates the electrolyte 1 and completely covers the open part of the electrolyte 1, including a junction of the inner bus bar 8 and the inner electrode 2, thus preventing the gas flowing through the inner electrode from leaking through the open part to the outside of the SOC chip.

## Claims

1. A preparation method of a SOC chip with the double-electrolyte structure, comprising the following steps:
(1) substrate preparation: preparing thin film substrates of the inner electrode (2) and the electrolytes (1) separately: adding polyvinyl butyral (PVB), triethanolamine, and ethanol in proportion in each component constituting the inner electrode (2) and the electrolytes (1), and conducting a tape casting operation;
(2) substrate lamination: aligning and laminating an electrolyte substrate, an inner electrode substrate with the plurality of regularly arranged gas paths (11), and an inner electrode substrate without the plurality of regularly arranged gas paths (11) in a predetermined order to form a substrate laminate; putting the substrate laminate into a vacuum bag for vacuuming and sealing; and subjecting the substrate laminate in the vacuum bag to a water bath of 75°C and 20 MPa for 5 min to form a fused laminate;
(3) cutting: putting the fused laminate into a cutting machine, and cutting the fused laminate into an SOC chip blank with a specified design shape;
(4) sintering: putting the SOC chip blank into a high-temperature furnace, and sintering the SOC chip blank according to a predetermined heat treatment regime, such that the SOC chip blank is shrank to form a high-strength SOC chip, wherein during a heat treatment, a gas path precursor is gasified and escapes to leave regular and even gas paths (11) in the inner electrode (2) of the SOC chip, wherein the sintering is performed at 1,400°C for 2 h;
(5) preparation of the intermediate layer (5): preparing, after the sintering, the intermediate layer (5) on the two electrolytes (1) of the SOC chip by drying at 90°C for 1 h, putting to the high-temperature furnace, raising the furnace temperature to 1,300°C for sintering for 2 h, and dropping the furnace temperature to room temperature at a rate not exceeding 5°C/min;
(6) reduction: putting, after the preparation of the intermediate layer (5), the SOC chip into a reduction furnace to reduce a nickel oxide in the inner electrode (2) into nickel, wherein the reduction is performed at 680°C for 6 h in a reducing atmosphere formed by a mixture of hydrogen and nitrogen, including 70-100% of hydrogen and 0-30% of nitrogen;
(7) preparation of the outer surface elements: printing, after the reduction, the outer surface elements on an outer surface of the SOC chip;
(8) preparation of the side sealing members (4): preparing, after the preparation of the outer surface elements, the side sealing members (4): preparing a rough and non-tight inner side sealing layer (401) first, and preparing a dense and tight outer side sealing layer (402) on the rough and non-tight inner side sealing layer (401) after the rough and non-tight inner side sealing layer (401) is dried;
(9) heat treatment: subjecting, after the preparation of the outer surface elements and the side sealing members (4), the SOC chip to the heat treatment, such that the outer surface elements are firmly connected to respective attachments, and at least one sub-layer of the side sealing members (4) is densified; and
(10) electrode strengthening by Samaria doped ceria (SDC) impregnation.

2. A solid oxide cell (SOC) chip with a double-electrolyte structure, comprising two electrolytes (1), wherein the two electrolytes (1) are separated by an inner electrode (2) sandwiched between the two electrolytes (1); a plurality of regularly arranged gas paths (11) is provided in the inner electrode (2); at least two sides of the inner electrode (2) are covered with side sealing members (4); outer surfaces of the electrolytes (1) are provided with outer surface elements; the outer surface elements comprise an outer electrode (3), an inner electrode plate (6), and an outer electrode plate (7); the inner electrode (2) is connected to the inner electrode plate (6); the outer electrode (3) is connected to the outer electrode plate (7); and the side sealing members (4) each comprise a plurality of sub-layers; at least one of the plurality of sub-layers is a dense and tight sub-layer; and at least one rough and non-tight sub-layer is provided between the dense and tight sub-layer and a side of the SOC chip;
**characterized in that** the outer surface elements further comprise an intermediate layer (5)
and the SOC chip is obtained according to the method of claim 1.

3. The SOC chip with the double-electrolyte structure according to claim 2, wherein each of the plurality of regularly arranged gas paths (11) in the inner electrode (2) has an equivalent cross-sectional diameter of 20-200 µm.

4. The SOC chip with the double-electrolyte structure according to claim 2, wherein the outer surface elements further comprise a plurality of outer collectors (12) covering an outer surface of the outer electrode (3); and a conductivity of each of the plurality of outer collectors (12) is not less than a conductivity of the outer electrode (3).

5. The SOC chip with the double-electrolyte structure according to claim 2, wherein the outer surface elements further comprise a protective layer (13); and the protective layer (13) covers at least one of the outer surface elements.

6. The SOC chip with the double-electrolyte structure according to claim 2, wherein the inner electrode (2) and the inner electrode plate (6) are connected through an inner bus bar (8); and a conductivity of the inner bus bar (8) is not less than a conductivity of the inner electrode (2).

7. The SOC chip with the double-electrolyte structure according to claim 6, wherein the inner bus bar (8) is located between the side sealing members (4) and the side of the SOC chip.

8. The SOC chip with the double-electrolyte structure according to claim 6, wherein the inner bus bar (8) is at least partially provided on a surface of a side of the electrolyte where the outer electrode (3) is located, and the inner bus bar (8) is connected to the inner electrode (2) through an opening of the electrolyte; and a sealing structure (10) is provided to cover a surface of the opening of the electrolyte to completely cover and seal a junction of the inner bus bar (8) and the inner electrode (2) at the opening of the electrolyte.

9. The SOC chip with the double-electrolyte structure according to claim 2, wherein the SOC chip is in a long strip shape gradually narrowed from an outer electrode region in a central part of the SOC chip to an end surface of the SOC chip provided with a gas path inlet and outlet, with a tapered edge at an angle of 5-60° with a straight edge of the outer electrode region in the central part of the SOC chip.

## Patentansprüche

1. Herstellungsverfahren eines SOC-Chips mit Doppelelektrolytstruktur, umfassend die folgenden Schritte:
(1) Substratvorbereitung: getrenntes Herstellen von Dünnschichtsubstraten der inneren Elektrode (2) und der Elektrolyte (1): Hinzufügen von Polyvinylbutyral (PVB), Triethanolamin und Ethanol proportional in jeder Komponente, darstellend die innere Elektrode (2) und die Elektrolyte (1), und Durchführen eines Bandgießvorgangs;
(2) Substratlaminierung: Ausrichten und Laminieren eines Elektrolytsubstrats, eines inneren Elektrodensubstrats mit der Vielzahl von regelmäßig angeordneten Gaswegen (11) und eines inneren Elektrodensubstrats ohne die Vielzahl von regelmäßig angeordneten Gaswegen (11) in einer vorbestimmten Reihenfolge, um ein Substratlaminat zu bilden; Einbringen des Substratlaminats in einen Vakuumbeutel zum Vakuumieren und Versiegeln und 5-minütiges Unterziehen des Substratlaminats im Vakuumbeutel einem Wasserbad bei 75 °C und 20 MPa, um ein geschmolzenes Laminat zu bilden;
(3) Schneiden: Einbringen des geschmolzenen Laminats in eine Schneidemaschine und Schneiden des geschmolzenen Laminats zu einem SOC-Chip-Rohling mit einer vorgegebenen Ausgestaltungsform;
(4) Sintern: Einbringen des SOC-Chip-Rohlings in einen Hochtemperaturofen und Sintern des SOC-Chip-Rohlings nach einem vorbestimmten Wärmebehandlungssystem, sodass der SOC-Chip-Rohling geschrumpft wird, um einen hochfesten SOC-Chip zu bilden, wobei während einer Wärmebehandlung ein Gaswegvorläufer vergast wird und entweicht, um regelmäßige und gleichmäßige Gaswege (11) in der inneren Elektrode (2) des SOC-Chips zu hinterlassen, wobei das Sintern bei 1.400 °C für 2 Std. durchgeführt wird;
(5) Vorbereiten der Zwischenschicht (5): nach dem Sintern Vorbereiten der Zwischenschicht (5) auf den beiden Elektrolyten (1) des SOC-Chips durch 1-stündiges Trocknen bei 90 °C, Einbringen in den Hochtemperaturofen, Erhöhen der Ofentemperatur auf 1.300 °C zum 2-stündigen Sintern und Absenken der Ofentemperatur auf Raumtemperatur bei einer Geschwindigkeit von nicht mehr als 5 °C/min.;
(6) Reduktion: nach dem Vorbereiten der Zwischenschicht (5) Einbringen des SOC-Chips in einen Reduktionsofen, um ein Nickeloxid in der inneren Elektrode (2) zu Nickel zu reduzieren, wobei die Reduktion bei 680 °C 6 Std. lang in einer Reduktionsatmosphäre durchgeführt wird, die durch eine Mischung aus Wasserstoff und Stickstoff, einschließend 70-100 % Wasserstoff und 0-30 % Stickstoff, gebildet ist;
(7) Vorbereiten der äußeren Oberflächenelemente: nach der Reduktion Drucken der äußeren Oberflächenelemente auf eine äußere Oberfläche des SOC-Chips;
(8) Vorbereiten der seitlichen Siegelungselemente (4): nach dem Vorbereiten der äußeren Oberflächenelemente Vorbereiten der seitlichen Siegelungselemente (4): zuerst Vorbereiten einer rauen und nicht abgedichteten inneren seitlichen Siegelungsschicht (401) und Vorbereiten einer dichten und abgedichteten äußeren seitlichen Siegelungsschicht (402) auf der rauen und nicht abgedichteten inneren seitlichen Siegelungsschicht (401), nachdem die raue und nicht abgedichtete innere seitliche Siegelungsschicht (401) getrocknet ist;
(9) Wärmebehandlung: nach dem Vorbereiten der äußeren Oberflächenelemente und der seitlichen Siegelungselemente (4) Unterziehen des SOC-Chips der Wärmebehandlung, sodass die äußeren Oberflächenelemente fest mit den jeweiligen Befestigungen verbunden sind und mindestens eine Unterschicht der seitlichen Siegelungselemente (4) verdichtet wird, und
(10) Elektrodenverstärkung durch Imprägnierung mit Samarium-dotiertem Ceroxid (SDC).

2. Festoxidzellen-Chip (SOC) mit einer Doppelelektrolytstruktur, umfassend zwei Elektrolyte (1), wobei die beiden Elektrolyte (1) durch eine innere Elektrode (2) getrennt sind, die zwischen den beiden Elektrolyten (1) eingelegt ist, wobei eine Vielzahl von regelmäßig angeordneten Gaswegen (11) in der inneren Elektrode (2) bereitgestellt ist, mindestens zwei Seiten der inneren Elektrode (2) mit seitlichen Siegelungselementen (4) bedeckt sind, äußere Oberflächen der Elektrolyte (1) mit äußeren Oberflächenelementen versehen sind, die äußeren Oberflächenelemente eine äußere Elektrode (3), eine innere Elektrodenplatte (6) und eine äußere Elektrodenplatte (7) umfassen, die innere Elektrode (2) mit der inneren Elektrodenplatte (6) verbunden ist, die äußere Elektrode (3) mit der äußeren Elektrodenplatte (7) verbunden ist und die seitlichen Siegelungselemente (4) jeweils eine Vielzahl von Unterschichten umfassen, mindestens eine der Vielzahl von Unterschichten eine dichte und abgedichtete Unterschicht ist und mindestens eine raue und nicht abgedichtete Unterschicht zwischen der dichten und abgedichteten Unterschicht und einer Seite des SOC-Chips bereitgestellt ist,
**dadurch gekennzeichnet, dass** die äußeren Oberflächenelemente zudem eine Zwischenschicht (5) umfassen
und der SOC-Chip gemäß dem Verfahren nach Anspruch 1 gewonnen wird.

3. SOC-Chip mit Doppelelektrolytstruktur nach Anspruch 2, wobei ein jeder der Vielzahl der regelmäßig angeordneten Gaswege (11) in der inneren Elektrode (2) einen äquivalenten Querschnittsdurchmesser von 20-200 µm aufweist.

4. SOC-Chip mit Doppelelektrolytstruktur nach Anspruch 2, wobei die äußeren Oberflächenelemente zudem eine Vielzahl von äußeren Kollektoren (12) umfassen, die eine äußere Oberfläche der äußeren Elektrode (3) bedecken, und eine Leitfähigkeit eines jeden der Vielzahl von äußeren Kollektoren (12) nicht kleiner ist als eine Leitfähigkeit der äußeren Elektrode (3).

5. SOC-Chip mit Doppelelektrolytstruktur nach Anspruch 2, wobei die äußeren Oberflächenelemente zudem eine Schutzschicht (13) umfassen und die Schutzschicht (13) mindestens eins der äußeren Oberflächenelemente bedeckt.

6. SOC-Chip mit Doppelelektrolytstruktur nach Anspruch 2, wobei die innere Elektrode (2) und die innere Elektrodenplatte (6) durch eine innere Stromschiene (8) verbunden sind und eine Leitfähigkeit der inneren Stromschiene (8) nicht kleiner ist als eine Leitfähigkeit der inneren Elektrode (2).

7. SOC-Chip mit Doppelelektrolytstruktur nach Anspruch 6, wobei die innere Stromschiene (8) zwischen den seitlichen Siegelungselementen (4) und der Seite des SOC-Chips befindlich ist.

8. SOC-Chip mit Doppelelektrolytstruktur nach Anspruch 6, wobei die innere Stromschiene (8) zumindest teilweise auf einer Oberfläche einer Seite des Elektrolyts bereitgestellt ist, auf der die äußere Elektrode (3) befindlich ist, und die innere Stromschiene (8) durch eine Öffnung des Elektrolyts mit der inneren Elektrode (2) verbunden ist und eine Siegelungsstruktur (10) bereitgestellt ist, um eine Oberfläche der Öffnung des Elektrolyts abzudecken, um eine Zusammenfügung der inneren Stromschiene (8) und der inneren Elektrode (2) an der Öffnung des Elektrolyts vollständig abzudecken und zu versiegeln.

9. SOC-Chip mit Doppelelektrolytstruktur nach Anspruch 2, wobei der SOC-Chip eine lange Streifenform aufweist, die sich allmählich von einem äußeren Elektrodenbereich in einem zentralen Teil des SOC-Chips zu einer Endoberfläche des SOC-Chips verschmälert, die mit einem Gaseinlass und -auslassweg versehen ist, mit einer sich verjüngenden Kante in einem Winkel von 5-60° mit einer geraden Kante des äußeren Elektrodenbereichs im zentralen Teil des SOC-Chips.

## Revendications

1. Procédé de préparation d'une puce SOC à structure à double électrolyte, comprenant les étapes suivantes :
(1) préparation de substrat : préparer des substrats en film mince de l'électrode interne (2) et des électrolytes (1) séparément : ajouter du poly(butyral vinylique) (PVB), du triéthanolamine et de l'éthanol en proportions dans chaque composant constituant l'électrode interne (2) et les électrolytes (1), et réaliser une opération de coulage en bande ;
(2) stratification de substrat : aligner et stratifier un substrat d'électrolyte, un substrat d'électrode interne avec la pluralité de canaux de gaz (11) disposés régulièrement et un substrat d'électrode interne sans la pluralité de canaux de gaz (11) disposés régulièrement selon un ordre prédéterminé afin de former un stratifié de substrat ; placer le stratifié de substrat dans un sac sous vide pour mettre sous vide et sceller ; et soumettre le stratifié de substrat dans le sac sous vide à un bain d'eau à 75°C et 20 MPa pendant 5 min pour former un stratifié fusionné ;
(3) découpe : placer le stratifié fusionné dans une machine de découpe, et découper le stratifié fusionné en une ébauche de puce SOC avec une forme de conception spécifiée ;
(4) frittage : placer l'ébauche de puce SOC dans un four à haute température, et fritter l'ébauche de puce SOC selon un régime de traitement thermique prédéterminé, de telle sorte que l'ébauche de puce SOC est rétrécie pour former une puce SOC à haute résistance, dans lequel pendant un traitement thermique, un précurseur de canal de gaz est gazéifié et s'échappe pour laisser des canaux de gaz (11) réguliers et uniformes dans l'électrode interne (2) de la puce SOC, dans lequel le frittage est effectué à 1400°C pendant 2 h ;
(5) préparation de la couche intermédiaire (5) : après le frittage, préparer la couche intermédiaire (5) sur les deux électrolytes (1) de la puce SOC en séchant à 90°C pendant 1 h, en plaçant dans le four à haute température, en élevant la température de four à 1300°C pour fritter pendant 2 h et en réduisant la température de four à la température ambiante à une vitesse qui n'excède pas 5°C/min ;
(6) réduction : après la préparation de la couche intermédiaire (5), placer de la puce SOC dans un four de réduction pour réduire un oxyde de nickel dans l'électrode interne (2) en nickel, dans lequel la réduction est effectuée à 680°C pendant 6 h dans une atmosphère réductrice formée par un mélange d'hydrogène et d'azote, comportant 70-100% d'hydrogène et 0-30% d'azote ;
(7) préparation des éléments de surface externe : après la réduction, imprimer les éléments de surface externe sur une surface externe de la puce SOC ;
(8) préparation des organes d'étanchéité latéraux (4) : après la préparation des éléments de surface externe, préparer les organes d'étanchéité latéraux (4) : préparer d'abord une couche d'étanchéité latérale interne rugueuse et non étanche (401), et préparer une couche d'étanchéité latérale externe dense et étanche (402) sur la couche d'étanchéité latérale interne rugueuse et non étanche (401) après séchage de la couche d'étanchéité latérale interne rugueuse et non étanche (401) ;
(9) traitement thermique : après la préparation des éléments de surface externe et des organes d'étanchéité latéraux (4), soumettre la puce SOC à un traitement thermique, de telle sorte que les éléments de surface externe soient fermement reliés à des attaches respectives, et qu'au moins une sous-couche des organes d'étanchéité latéraux (4) soit densifiée ; et
(10) renforcement de l'électrode par imprégnation d'oxyde de cérium dopé au samarium (SDC).

2. Puce de pile à oxyde solide (SOC) à structure à double électrolyte, comprenant deux électrolytes (1), dans laquelle les deux électrolytes (1) sont séparés par une électrode interne (2) prise en sandwich entre les deux électrolytes (1) ; une pluralité de canaux de gaz (11) disposés régulièrement est disposée dans l'électrode interne (2) ; au moins deux côtés de l'électrode interne (2) sont recouverts d'organes d'étanchéité latéraux (4) ; des surfaces externes des électrolytes (1) sont pourvues d'éléments de surface externe ; les éléments de surface externe comprennent une électrode externe (3), une plaque d'électrode interne (6) et une plaque d'électrode externe (7) ; l'électrode interne (2) est reliée à la plaque d'électrode interne (6) ; l'électrode externe (3) est reliée à la plaque d'électrode externe (7) ; et chacun des organes d'étanchéité latéraux (4) comprend une pluralité de sous-couches ; au moins une parmi la pluralité de sous-couches est une sous-couche dense et étanche ; et au moins une sous-couche rugueuse et non étanche est disposée entre la sous-couche dense et étanche et un côté de la puce SOC ;
**caractérisée en ce que** les éléments de surface externe comprennent en outre une couche intermédiaire (5)
et la puce SOC est obtenue selon le procédé de la revendication 1.

3. Puce SOC à structure à double électrolyte selon la revendication 2, dans laquelle chacun de la pluralité de canaux de gaz (11) disposés régulièrement dans l'électrode interne (2) présente un diamètre de section transversale équivalent de 20-200 µm.

4. Puce SOC à structure à double électrolyte selon la revendication 2, dans laquelle les éléments de surface externe comprennent en outre une pluralité de collecteurs externes (12) recouvrant une surface externe de l'électrode externe (3) ; et une conductivité de chacun de la pluralité des collecteurs externes (12) n'est pas inférieure à une conductivité de l'électrode externe (3).

5. Puce SOC à structure à double électrolyte selon la revendication 2, dans laquelle les éléments de surface externe comprennent en outre une couche protectrice (13) ; et la couche protectrice (13) recouvre au moins un parmi les éléments de surface externe.

6. Puce SOC à structure à double électrolyte selon la revendication 2, dans laquelle l'électrode interne (2) et la plaque d'électrode interne (6) sont reliées à travers une barre omnibus interne (8) ; et une conductivité de la barre omnibus interne (8) n'est pas inférieure à une conductivité de l'électrode interne (2).

7. Puce SOC à structure à double électrolyte selon la revendication 6, dans laquelle la barre omnibus interne (8) est située entre les organes d'étanchéité latéraux (4) et le côté de la puce SOC.

8. Puce SOC à structure à double électrolyte selon la revendication 6, dans laquelle la barre omnibus interne (8) est disposée au moins partiellement sur une surface d'un côté de l'électrolyte où l'électrode externe (3) est située, et la barre omnibus interne (8) est reliée à l'électrode interne (2) à travers une ouverture de l'électrolyte ; et une structure d'étanchéité (10) est destinée à recouvrir une surface de l'ouverture de l'électrolyte pour couvrir et sceller complètement une jonction de la barre omnibus interne (8) et de l'électrode interne (2) au niveau de l'ouverture de l'électrolyte.

9. Puce SOC à structure à double électrolyte selon la revendication 2, dans laquelle la puce SOC est en forme de bande longue qui se rétrécie graduellement depuis une région d'électrode externe dans une partie centrale de la puce SOC jusqu'à une surface d'extrémité de la puce SOC pourvue d'une entrée et d'une sortie de canal de gaz, avec un bord effilé à un angle de 5-60° avec un bord droit de la région d'électrode externe dans la partie centrale de la puce SOC.
